# EUROPÄISCHE PATENTANMELDUNG

(11) **EP 2 020 593 A1**
(43) Veröffentlichungstag der Anmeldung: **04.02.2009**
(21) Anmeldenummer: 08013322.6
(22) Anmeldetag: 24.07.2008
(51) Int. Cl.: G01G 19/44

(54) **Waage**

(30) Priorität: 27.07.2007 DE 102007035753
(71) Anmelder: Leifheit AG, 56377 Nassau/Lahn (DE)
(72) Erfinder: Gross, Christian, 57250 Netphen (DE)
(74) Vertreter: Ullrich & Naumann

(57) **Zusammenfassung**

Eine Waage (1), insbesondere zur Verwendung im Haushalt, mit einer Wägeeinheit (6), einer mit der Wägeeinheit (6) wirkverbundenen Aufnahme (2) für zu wiegendes Gut (3) und einem Datenspeicher, wobei das Wiegeergebnis und/oder Daten aus dem Datenspeicher über ein Display (4) darstellbar sind, ist dadurch gekennzeichnet, dass der Waage (1) eine Leseeinrichtung (5) zum Einlesen von Informationen in den Datenspeicher zugeordnet ist und dass die Daten im Datenspeicher bearbeitbar und über das Display (4) darstellbar sind.

## Beschreibung

Die Erfindung betrifft eine Waage, insbesondere zur Verwendung im Haushalt, mit einer Wägeeinheit, einer mit der Wägeeinheit wirkverbundenen Aufnahme für zu wiegendes Gut und einem Datenspeicher, wobei das Wiegeergebnis und/oder Daten aus dem Datenspeicher über ein Display darstellbar sind.

Waagen der in Rede stehenden Art sind seit Jahren aus der Praxis bekannt. Sie werden in unterschiedlichen Bauformen im gewerblichen wie auch im privaten Bereich zur Gewichtsbestimmung von Gütern aller Art, insbesondere Haushaltsutensilien wie Lebensmitteln, Schüttgut, Postsendungen oder dergleichen, oder zum Wiegen von Personen verwendet.

Unabhängig vom konkreten Einsatzzweck weisen die Waagen eine Aufnahme für das zu wiegende Gut und eine Wägeeinheit auf. Die Aufnahme ist dabei mit der Wägeeinheit wirkverbunden, so dass die Wägeeinheit das Gewicht des aufgenommenen Guts erfassen und bestimmen (wiegen) kann. Zur Darstellung des ermittelten Wiegeergebnisses ist ein Display vorgesehen, auf welchem sich das mittels der Wägeeinheit bestimmte Wiegeergebnis ablesen lässt.

Bekannte Waagen weisen des Weiteren einen Datenspeicher auf, der unter anderem zur Speicherung von Wiegeergebnissen genutzt werden kann. Die im Datenspeicher abgelegten Daten sind ebenfalls über das Display darstellbar. Mittels des Datenspeichers lassen sich beispielsweise im Fall von Personenwaagen Messreihen für das Körpergewicht verteilt über mehrere Tage, Wochen, Monate oder Jahre aufstellen. Durch das jeweilige Ablegen des Wiegeergebnisses nach der Messung im Datenspeicher - zweckmäßigerweise unter zusätzlicher Speicherung des Wiegedatums - lässt sich die Entwicklung des Körpergewichts zuverlässig dokumentieren, woraus wiederum Analysen (z.B. in Bezug auf die Ernährung, sportliche Aktivitäten etc.) vorgenommen werden können.

Nachteilig an den bekannten Waagen ist, dass sich deren Funktionalität auf die Gewichtsbestimmung des gewogenen Guts sowie auf eine Datenspeicherung zum Ablegen ermittelter Wiegeergebnisse beschränkt. Die Waagen erfordern vom Benutzer eine mühsame Analyse der Wiegeergebnisse, was einem nutzbringenden komfortablen Einsatz der Waage entgegensteht.

Andere Waagen eignen sich zum Abwiegen von Lebensmitteln oder von Postsendungen. Auch bei diesen Waagen lassen sich die Wiegeergebnisse im Datenspeicher ablegen und über ein Display darstellen, wodurch beispielsweise beim Kochen oder Backen eine bestimmte Zutatenportionierung gewährleistet bzw. ein maximales Postsendungsgewicht eingehalten werden kann. Ein weiterreichender Nutzen der Waagen für den Benutzer ergibt sich jedoch nicht.

Der vorliegenden Erfindung liegt daher die Aufgabe zugrunde, eine Waage der eingangs genannten Art derart auszugestalten und weiterzubilden, dass sich diese bei einfacher Bedienbarkeit besser für praktische Einsatzzwecke wie beispielsweise die Überwachung des Körpergewichts, die Speisenzubereitung, die Postfrankierung und dgl. nutzen lässt.

Erfindungsgemäß wird die voranstehende Aufgabe durch die Merkmale des Patentanspruchs 1 gelöst. Danach ist die in Rede stehende Waage dadurch gekennzeichnet, dass der Waage eine Leseeinrichtung zum Einlesen von Informationen in den Datenspeicher zugeordnet ist und dass die Daten im Datenspeicher bearbeitbar und über das Display darstellbar sind.

In erfindungsgemäßer Weise ist zunächst erkannt worden, dass das von einer Waage ermittelte Wiegeergebnis für sich gesehen häufig nur eine begrenzte Aussagekraft für den Benutzer hat. Dies liegt oftmals daran, dass Menschen im Umgang mit Zahlen ungeübt sind, sich Zahlen schlecht merken können und/oder dazu neigen, Zahlen oder deren Veränderungen falsch einzuschätzen, also überzubewerten oder unterzubewerten.

Des Weiteren ist erfindungsgemäß gesehen worden, dass den mit einer Waage ermittelten Wiegeergebnissen in der Praxis erst dadurch eine Bedeutung zukommt, dass diese in Zusammenhang mit weiteren Informationen gestellt werden. So ist beim Abwiegen von Postsendungen meist nicht primär deren Gewicht, sondern die - vom Gewicht abhängige - nötige Frankierung für den Benutzer von Interesse. Bei der Zubereitung von Speisen ist häufig nicht das absolute Gewicht einer Zutat von Interesse, sondern dessen Verhältnis zu weiteren Zutaten. Derartige, hier nur beispielhaft genannte Informationen müssen bei herkömmlichen Waagen vom Benutzer selbständig ermittelt bzw. herangezogen (z.B. Nachschlagen in einem Kochbuch) und der Gewichtsmessung zugeordnet werden, um den Wiegevorgang sinnvoll durchzuführen. Dies erfordert Übung, Konzentration und kann äußerst mühsam sein.

Der erfindungsgemäßen Waage ist zur Vermeidung dieser Nachteile eine Leseeinrichtung zugeordnet, mittels derer sich Informationen in den Datenspeicher einlesen lassen. Die eingelesenen Daten lassen sich im Datenspeicher bearbeiten und über das Display darstellen. Auf diese Weise sind erfindungsgemäß der Nutzen und die Verwendbarkeit der Waage unter praktischen Gesichtspunkten deutlich erhöht, da der Benutzer auf bequeme Weise jedwede Art von Informationen, die im Zusammenhang mit dem aktuellen und/oder mit gespeicherten Wiegeergebnissen stehen, der Waage durch einfaches Einlesen zur Verfügung stellt. Bei den einzulesenden Informationen kann es sich beispielsweise um Koch-, Backrezepte, Diätpläne, gewichtsspezifische Preise (zur Frankierung von Postsendungen, zur Preisauszeichnung) oder dgl. handeln. Die eingelesenen Informationen können anschließend durch Zuordnung zu einem oder zu mehreren Wiegeergebnissen im Datenspeicher bearbeitet werden, wodurch sich vielfältige Anwendungsmöglichkeiten ergeben.

In einer vorteilhaften Weiterbildung der Erfindung handelt es sich bei der Leseeinrichtung um ein Gerät zur optischen Datenerfassung, insbesondere um einen Scanner. Durch ein derartiges Gerät lassen sich Informationen, die bspw. auf Druckmedien wie Büchern, Zeitungen, Zeitschriften etc. vorliegen, auf besonders komfortable Weise in den Datenspeicher einlesen. Dabei werden die zumeist analog vorliegenden Informationen mittels optischer Sensoren aufgenommen und mit Hilfe eines Analog-/Digital-Wandlers in digitale Form übersetzt. Eine Verarbeitung, Analyse oder Visualisierung kann im Anschluss mittels einer elektronischen Datenverarbeitungseinheit stattfinden.

Zweckmäßigerweise ist die Leseeinrichtung so ausgebildet, dass sich mit dieser Schrift- und/oder Strichcodes und/oder sonstige Zeichen erkennen lassen. Die Erkennung kann zu unterschiedlichsten Zwecken genutzt werden. So könnten auf bequeme Weise jedwede Art von Zubereitungsrezepten für Speisen oder Getränke aus Fachzeitschriften, Zeitungen oder dgl. eingelesen werden. Die Leseeinrichtung könnte weiterhin zur Identifizierung von Personen genutzt werden, indem sie diese Personen anhand ihrer Visitenkarte, ihres Ausweises oder dgl. erkennt. In Abhängigkeit von der erkannten Person könnte die Waage auf bestimmte, individualisierte Datensätze zurückgreifen, was bspw. bei Personenwaagen eine individuelle Auswertung ermöglicht.

Zur Identifizierung von Personen könnte die Leseeinrichtung in einer vorteilhaften Weiterbildung der Erfindung zur Erkennung biometrischer Daten dienen. In diesem Fall erfolgt die Erkennung demnach nicht über gedruckte Zeichen, sondern bspw. über die Erkennung des Fingerabdrucks, des Netzhautmusters oder sonstiger biometrischer Merkmale von Menschen, Tieren oder Pflanzen.

Alternativ oder ergänzend könnte es sich bei der Leseeinrichtung um ein Gerät zum Einlesen elektronisch vorliegender Daten handeln. Die Leseeinrichtung könnte in diesem Fall bspw. einen Kartenleser umfassen, mittels dessen sich auf Speicherkarten vorliegende Daten einlesen lassen.

In praktischer Hinsicht kann es von Vorteil sein, die Lesseinrichtung als von der Waage separate Einheit auszuführen. Die Leseeinrichtung ließe sich dann in Bezug auf deren Gewicht und Abmessungen so gestalten, dass diese sich zum Einlesen der Informationen leicht handhaben lässt. Die Leseeinrichtung könnte in diesem Fall unabhängig von der Waage bewegt werden, was insbesondere beim Einlesen von Informationen von entfernten oder schwer beweglichen Objekten von Vorteil sein kann. Die Lesseinrichtung könnte dabei in ein Gehäuse integriert sein, das zum einfachen Greifen vorzugsweise in Form eines Stifts ("Scanner-Pen"), Handgriffs oder dgl. gestaltet ist.

Zweckmäßigerweise könnte eine Datenübertragungseinrichtung vorgesehen sein, mittels welcher die Leseeinrichtung mit der Waage kommuniziert. Je nach Einsatzzweck der Waage ist es denkbar, dass die Datenübertragungseinrichtung einseitig oder wechselseitig mit der Waage kommuniziert. Die Waage könnte dazu eine Datenschnittstelle aufweisen, die zur Kommunikation mit der Leseeinrichtung und/oder mit weiteren elektronischen Einrichtungen dient. Die Datenschnittstelle ließe sich demnach nicht nur zur Kommunikation mit der Leseeinrichtung nutzen, sondern es ließen sich auch sonstige elektronische Einrichtungen wie bspw. Computer, weitere Waagen, sonstige Ein- bzw. Ausgabegeräte oder dgl. mit der Waage nutzen.

Ein besonderer Bedienungskomfort ergibt sich, wenn die Datenübertragung zwischen der Leseeinrichtung und der Waage drahtlos erfolgt. Bei Ausführung der Leseeinrichtung als von der Waage separate Einheit ließe sich die Leseeinrichtung in diesem Falle frei bewegen, wodurch sich die Leseeinrichtung sogar auf besonders bequeme Weise mitführen lässt, ohne dass notwendigerweise die Waage ebenfalls mitgeführt wird. Eine drahtlose Datenübertragung könnte insbesondere über elektromagnetische Wellen erfolgen, wobei unterschiedliche Übertragungstechnologien bzw. -standards (Funk, Bluetooth, Infrarot, Mikrowellen, etc.) zum Einsatz kommen können. Die Leseeinrichtung sollte in diesem Falle über eine eigene Stromversorgung verfügen.

Alternativ ist es denkbar, die Datenübertragung per Kabel, insbesondere USB-Kabel, zu realisieren. Eine Datenübertragung per Kabel bietet gegenüber drahtloser Kommunikation den Vorteil größerer Übertragungssicherheit sowie eines erheblich geringeren technischen Aufwands. Ferner könnte die Stromversorgung der Leseeinheit über das Kabel erfolgen.

Das bei der Waage zum Einsatz kommende Display könnte in vorteilhafter Weise eine Ziffernanzeige aufweisen. Ziffernanzeigen können bspw. als kostengünstige Sieben-Segment-Anzeigen ausgeführt sein, die eine deutliche, leicht lesbare Darstellung von Zahlen ermöglichen. Sollen mittels des Displays nicht lediglich Ziffern bzw. Zahlen dargestellt werden, sondern soll auch eine grafische Darstellung, ggf. eine mehrfarbige Darstellung möglich sein, so könnte das Display in vorteilhafter Weise einen Monitor, vorzugsweise einen Leuchtkristall-Monitor, umfassen. Monitore bieten den Vorteil, dass sich - bei entsprechender Rasterung - praktisch beliebige Grafiken darstellen lassen, was insbesondere im hier vorliegenden Fall die Möglichkeit eröffnet, verschiedenartige Daten bzw. Informationen im Zusammenhang darzustellen.

Unabhängig von dessen konkreter Ausführung könnte das Display in einer vorteilhaften Weiterbildung das ermittelte Wiegeergebnis und/oder im Datenspeicher abgelegte Daten und/oder mit der Leseeinheit eingelesene Informationen darstellen. Umfangreiche Auswertungen sind dadurch möglich.

Prinzipiell ist es denkbar, das Display der Waage zuzuordnen. Alternativ oder ergänzend könnte das Display der Leseeinrichtung zugeordnet sein.

Zur Ermöglichung eines hohen Speichervolumens des Datenspeichers könnte der Datenspeicher ein Massenspeichermedium umfassen. Hierbei könnte es sich bspw. um einen optischen Datenträger (CD-ROM), magnetischen Datenträger (Festplatte, Diskette) oder auch um eine Speicherkarte handeln. Neben der hohen Speicherkapazität ergibt sich der Vorteil, dass ein Datenverlust bei Abschalten der Waage vermieden wird.

Die Waage und/oder die Leseeinrichtung könnte bzw. könnten eine Bedieneinheit aufweisen, die insbesondere zum Ein-/Ausschalten der Waage und/oder der Leseeinheit, zur Steuerung des Displays, zur Kalibrierung der Wägeeinheit, zur manuellen Dateneingabe oder dgl. dient.

Neben der durch das Display realisierten optischen Informationsausgabe der Waage kann es vorteilhaft sein, dass die Waage eine akustische Ausgabeeinheit umfasst. Durch die akustische Signalausgabe könnte dem Benutzer die Bedienung der Waage erleichtert werden, indem bspw. nach erfolgreichem Einlesen mittels der Leseeinrichtung ein akustischer Quittierungston ertönt, oder indem während der Speisenzubereitung anhand eines zuvor eingelesenen Rezepts dem Benutzer sprachlich hörbare Anweisungen für die Rezeptbefolgung gegeben werden.

Zur Ermöglichung der Gewichtsbestimmung des zu wiegenden Guts ist es zweckmäßig, dass die Wägeeinheit einen Kraftsensor aufweist. Bei diesem Kraftsensor handelt es sich vorzugsweise um eine sog. Wägezelle, welche einen oder mehrere elastisch verformbare Körper umfasst, deren Verformung ein elektrisches Ausgangssignal erzeugt. Anhand des elektrischen Ausgangssignals ermittelt die Wägeeinheit das Wiegeergebnis.

Es kann sich bei der Waage grundsätzlich um jede Waage handeln, welche die erfindungsgemäßen Merkmale aufweist. In einer vorteilhaften Ausführungsform ist die Waage als Personenwaage ausgeführt, wobei insbesondere die Wägeeinheit und die Aufnahme zum Wiegen von Personen geeignet gestaltet sind. In diesem Fall kommt die Waage insbesondere zur Überwachung des Körpergewichts zum Einsatz.

Alternativ oder ergänzend könnte die Waage zum Wiegen von Haushaltsutensilien, insbesondere Lebensmitteln, Tierfuttermitteln, Postsendungen oder dergleichen, ausgeführt sein. Beliebige weitere Einsatzgebiete sind denkbar, wie bspw. das Abwiegen von Chemikalien, Reinigungsmitteln, Kleinteilen, Düngemitteln, Baustoffen, Papiererzeugnissen oder dgl.

Eine besonders nutzbringende Weiterbildung der Waage ließe sich realisieren, wenn diese sowohl als Personenwaage als auch zum Wiegen von Lebensmitteln geeignet ist. Durch eine derartige Gestaltung könnte die Waage im Rahmen eines vom Benutzer verfolgten Diätplans einerseits zur Kontrolle der täglichen Nahrungsaufnahme, andererseits zur täglichen Überwachung des Körpergewichts zum Einsatz kommen, wodurch ernährungsbedingte Veränderungen des Körpergewichts auf besonders genaue Weise analysiert werden könnten.

Zu diesem Zweck - und auch zu anderen Zwecken - könnte die Aufnahme austauschbar gestaltet sein, um eine Nutzung der Waage für verschiedene Güter zu ermöglichen. Demnach könnten für verschiedene zu wiegende Güter entsprechende Aufnahmen zur Verfügung stehen, die dem Einsatzzweck entsprechend zur Anwendung kommen.

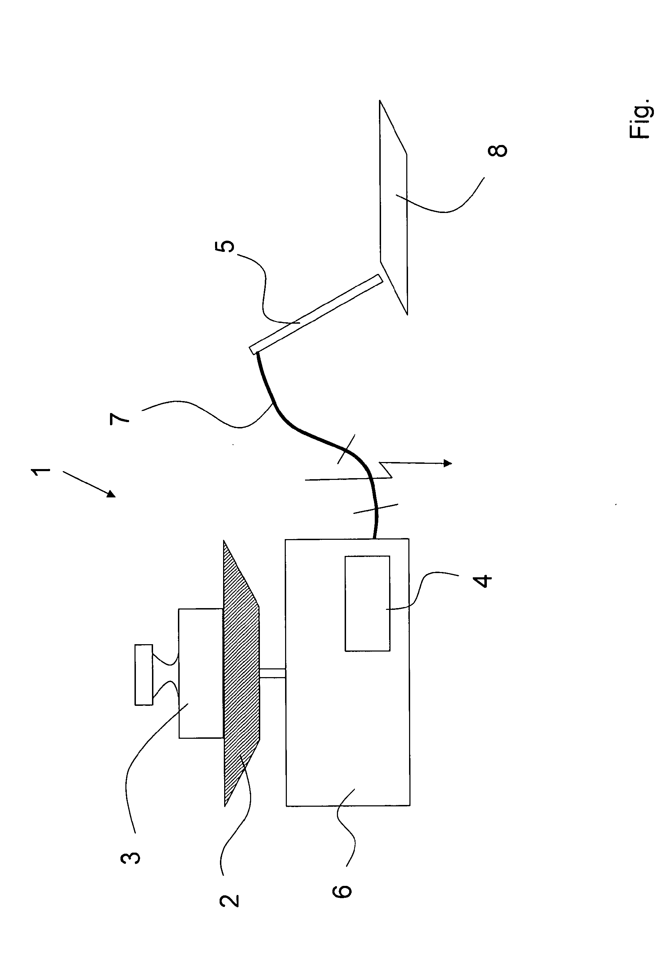

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigt
- die einzige Fig.: ein Ausführungsbeispiel einer erfindungsgemäßen Waage in schematischer Ansicht.

Die einzige Fig. zeigt eine erfindungsgemäße Waage 1, die im Wesentlichen eine Wägeeinheit 6 und eine mit der Wägeeinheit 6 wirkverbundene Aufnahme 2 umfasst. Die Aufnahme 2 ist als schalenähnliches Behältnis ausgeführt, welches das Gut 3 aufnimmt. Beliebige andere Formen der Aufnahme 2 sind denkbar. Es kann sich bei dem Gut 3 bspw. um Lebensmittel handeln. Zum Wiegen einer Person könnte die Aufnahme 2 eine im Wesentlichen ebene obere Fläche aufweisen, auf welche sich die Person stellt.

An dem Gehäuse der Waage 1 ist ein Display 4 angeordnet, das bspw. einen Flüssigkristall-Monitor (LCD) umfasst. Mittels des Displays 4, welches sich durch eine nicht dargestellte Bedieneinheit bedienen lässt, können unter anderem das von der Wägeeinheit 6 ermittelte Wiegeergebnis und/oder Daten aus einem (ebenfalls nicht dargestellten) Datenspeicher dargestellt werden.

Wie der Fig. zu entnehmen, ist der Waage 1 eine Leseeinrichtung 5 zugeordnet, die mittels eines USB-Kabels 7 zur Kommunikation - ggf. auch zur Stromversorgung - mit der Waage 1 verbunden ist. Alternativ erfolgt die Kommunikation drahtlos, beispielsweise mittels Bluetooth, was in der Fig. symbolisch durch einen Blitz angedeutet ist.

Es handelt sich bei der Leseeinrichtung 5 um eine Scan-Einrichtung, die hier als Stift ("Scanner-Pen") ausgeführt ist. Die Leseeinrichtung 5 dient dazu, Informationen von einem Informationsträger 8 in den Datenspeicher der Waage 1 einzulesen. Bei dem Informationsträger 8 kann es sich prinzipiell um ein beliebiges, mit optisch erfassbaren Informationen versehenes Objekt handeln, wie bspw. eine Zeitschrift, eine Zeitung, ein Kochbuch, eine Produktverpackung, einen Fingerabdruck oder dgl.

Sämtliche in den Datenspeicher eingelesene Informationen lassen sich bearbeiten und über das Display 4 darstellen. Der Datenspeicher kann auf vorteilhafte Weise ein Massenspeichermedium umfassen, mittels dessen sich im Datenspeicher befindliche Daten in großer Menge und/oder langfristig speichern lassen.

Die Waage 1 lässt sich bspw. auf vorteilhafte Weise nutzen, um Koch-, Back- oder Diätrezepte, die z.B. in Fachmagazinen veröffentlicht werden, auf bequeme Weise mittels der Leseeinrichtung 5 der Waage 1 einzulesen. Das Einlesen erfolgt dabei mittels eines Texterkennungsprogramms, so dass insbesondere im Rezept enthaltene Gewichts- bzw. Mengenangaben für einzelne Zutaten sowie weitere zugehörige Informationen erkannt und dem Datenspeicher zugeführt werden.

Die Leseeinrichtung 5 kann alternativ oder ergänzend dazu verwendet werden, die die Waage 1 benutzende Person zu identifizieren, was bspw. anhand eines eingelesenen Fingerabdrucks der bedienenden Person erfolgen kann.

Über die Bedieneinheit könnten weitere personenspezifische Daten wie Geburtsdatum, Körpergröße, Geschlecht, Essgewohnheiten, etc. eingegeben werden, wobei die Waage 1 auf Basis der gemachten Angaben und des eingelesenen Rezepts eine zur Einhaltung eines vorgegebenen Diätplans geeignete Mengenumrechnung der Zutaten des Gerichts vornimmt. Auch können Mengenanpassungen von Zutaten berechnet werden, um Rezepte für unterschiedliche Anzahlen von Personen zuzubereiten.

Im Anschluss lassen sich die einzelnen Zutaten des Gerichts mittels der Aufnahme 2 genau portionieren, wobei über das Display 4 auf komfortable Weise die jeweils abzuwiegende Zutat dargestellt werden kann. Die Darstellung im Display 4 kann mittels Text oder auf besonders ansprechende Weise auch durch farblich-grafische Darstellung der jeweiligen Zutat erfolgen. Die einzelnen Wiegevorgänge sowie auch die sonstige Befolgung des Rezepts könnten von einer akustischen Ausgabeeinheit unterstützt werden, welche bspw. bei Erreichen eines gewünschten Gewichts einen Quittierungston abgibt oder welche den Rezeptablauf sprachlich ansagt.

Die Waage 1 kann mit verschiedenen Aufnahmen 2 ausgestattet sein, wodurch sich eine vielseitige Verwendbarkeit ergeben kann. So könnte die Waage 1 mit Verwendung einer flächigen Aufnahme zum Wiegen von Gegenständen, Personen oder Tieren genutzt werden. Durch Verwendung einer Aufnahme 2 in Form eines Behältnisses eignet sich die Waage 1 insbesondere zum Wiegen von Schüttgut, Kleinteilen, Flüssigkeiten oder dgl. Eine Herstellung von Getränken (Cocktail-Mischung auf Gewichtsbasis) ist denkbar.

Bei Verwendung der Waage 1 im Rahmen eines Fitnessplans oder Diätplans könnte die Waage 1 sowohl als Personenwaage als auch als Kochwaage benutzt werden, wobei sich für den Benutzer insbesondere durch die mögliche Gegenüberstellung von täglichem Körpergewicht und eingenommener Nahrung vielfältige Analysemöglichkeiten bieten, und die Speisenportionierung leichter kontrollierbar ist. Durch eine separate Ausführung von Waage 1 und Leseeinrichtung 5 könnten diese örtlich unabhängig voneinander verwendet werden.

Hinsichtlich weiterer vorteilhafter Ausgestaltungen der erfindungsgemäßen Waage wird zur Vermeidung von Wiederholungen auf den allgemeinen Teil der Beschreibung sowie auf die beigefügten Patentansprüche verwiesen.

Schließlich sei ausdrücklich darauf hingewiesen, dass das voranstehend beschriebene Ausführungsbeispiel der erfindungsgemäßen Waage lediglich zur Erörterung der beanspruchten Lehre dient, diese jedoch nicht auf das Ausführungsbeispiel einschränkt.

### Bezugszeichenliste

- 1: Waage
- 2: Aufnahme
- 3: (zu wiegendes) Gut
- 4: Display
- 5: Leseeinrichtung
- 6: Wägeeinheit
- 7: Kabel
- 8: Informationsträger

## Patentansprüche

1. Waage (1), insbesondere zur Verwendung im Haushalt, mit einer Wägeeinheit (6), einer mit der Wägeeinheit (6) wirkverbundenen Aufnahme (2) für zu wiegendes Gut (3) und einem Datenspeicher, wobei das Wiegeergebnis und/oder Daten aus dem Datenspeicher über ein Display (4) darstellbar sind,
**dadurch gekennzeichnet, dass** der Waage (1) eine Leseeinrichtung (5) zum Einlesen von Informationen in den Datenspeicher zugeordnet ist und dass die Daten im Datenspeicher bearbeitbar und über das Display (4) darstellbar sind.

2. Waage nach Anspruch 1, **dadurch gekennzeichnet, dass** es sich bei der Leseeinrichtung (5) um ein Gerät zur optischen Datenerfassung, insbesondere um einen Scanner, handelt.

3. Waage nach Anspruch 1 oder 2, **dadurch gekennzeichnet, dass** die Leseeinrichtung (5) zur Erkennung von Schrift und/oder Strichcodes und/oder sonstigen Zeichen dient, wobei die Leseeinrichtung (5) zur Erkennung biometrischer Daten dienen kann.

4. Waage nach einem der Ansprüche 1 bis 4, **dadurch gekennzeichnet, dass** es sich bei der Leseeinrichtung (5) um ein Gerät zum Einlesen elektronisch vorliegender Daten handelt.

5. Waage nach einem der Ansprüche 1 bis 4, **dadurch gekennzeichnet, dass** die Leseeinrichtung (5) als von der Waage (1) separate Einheit ausgeführt ist und/oder dass die Leseeinrichtung (5) in ein Gehäuse integriert ist, das zum einfachen Greifen vorzugsweise in Form eines Stifts, Handgriffs oder dergleichen gestaltet ist, wobei die Leseeinrichtung (5) mit der Waage (1) mittels einer Datenübertragungseinrichtung kommunizierten kann.

6. Waage nach einem der Ansprüche 1 bis 5, **dadurch gekennzeichnet, dass** die Waage (1) eine Datenschnittstelle aufweist, die zur Kommunikation mit der Leseeinrichtung (5) und/oder mit weiteren elektronischen Einrichtungen dient.

7. Waage nach einem der Ansprüche 1 bis 6, **dadurch gekennzeichnet, dass** die Datenübertragung drahtlos, insbesondere über elektromagnetische Wellen oder per Kabel (7), insbesondere USB-Kabel, erfolgt.

8. Waage nach einem der Ansprüche 1 bis 7, **dadurch gekennzeichnet, dass** das Display (4) eine Ziffernanzeige und/oder einen Monitor, vorzugsweise LCD-Monitor oder dergleichen, umfasst, wobei das Display (4) das ermittelte Wiegeergebnis und/oder im Datenspeicher abgelegte Daten und/oder mit der Leseeinheit (5) eingelesene Informationen darstellen kann.

9. Waage nach einem der Ansprüche 1 bis 8, **dadurch gekennzeichnet, dass** das Display (4) der Waage (1) und/oder der Leseeinrichtung (5) zugeordnet ist.

10. Waage nach einem der Ansprüche 1 bis 9, **dadurch gekennzeichnet, dass** der Datenspeicher ein Massenspeichermedium umfasst.

11. Waage nach einem der Ansprüche 1 bis 10, **dadurch gekennzeichnet, dass** die Waage (1) und/oder die Leseeinrichtung (5) eine Bedieneinheit aufweist, die insbesondere zum Ein-/Ausschalten der Waage (1) und/oder der Leseeinheit (5), zur Steuerung des Displays (4), zur Kalibrierung der Wägeeinheit (6), zur manuellen Dateneingabe oder dergleichen dient.

12. Waage nach einem der Ansprüche 1 bis 11, **dadurch gekennzeichnet, dass** die Waage (1) eine akustische Ausgabeeinheit umfasst.

13. Waage nach einem der Ansprüche 1 bis 12, **dadurch gekennzeichnet, dass** die Wägeeinheit (6) einen Kraftsensor aufweist, bei dem es sich vorzugsweise um eine Wägezelle handelt.

14. Waage nach einem der Ansprüche 1 bis 13, **dadurch gekennzeichnet, dass** die Waage (1) als Personenwaage ausgeführt ist und/oder dass die Waage (1) zum Wiegen von Haushaltsutensilien, insbesondere Lebensmitteln, Tierfuttermitteln, Postsendungen oder dergleichen, ausgeführt ist.

15. Waage nach einem der Ansprüche 1 bis 14, **dadurch gekennzeichnet, dass** die Aufnahme (2) austauschbar gestaltet ist, um eine Nutzung der Waage (1) für verschiedene Güter (3) zu ermöglichen.
